# EUROPÄISCHE PATENTSCHRIFT

(11) **EP 0 773 849 B1**
(45) Veröffentlichungstag und Bekanntmachung des Hinweises auf die Patenterteilung: **14.11.2001**
(21) Anmeldenummer: 95927615.5
(22) Anmeldetag: 27.07.1995
(51) Int. Cl.: B23B 31/113, F16B 21/04

(54) **NACHBEARBEITUNGSWERKZEUG FÜR DIE PRÄZISIONSBEARBEITUNG VON LÖCHERN**
FINISHING TOOL FOR PRECISION MACHINING OF HOLES
OUTIL DE FINITION POUR L'USINAGE DE PRECISION DE TROUS

(30) Priorität: 01.08.1994 CZ 273794
(43) Veröffentlichungstag der Anmeldung: 21.05.1997
(73) Patentinhaber: HAM-FINAL, 602 00 Brno (CS)
(72) Erfinder: Fiala, Stanislav, 628 00 Brno (CS)
(74) Vertreter: Kerr, Simonne June
(86) Internationale Anmeldenummer: CZ9500015
(87) Internationale Veröffentlichungsnummer: WO9604089

(56) Entgegenhaltungen:
- EP-A- 0 580 468
- US-A- 2 057 143
- US-A- 4 995 768

## Beschreibung

### Gebiet der Technik

Die Erfindung betrifft ein Nachbearbeitungswerkzeug für das Präzisionsbearbeiten von Löchern, das aus einem Einspannteil, einem Mitnehmerkopf und einem austauschbaren Schneidteil besteht, der mit mindestens drei auf seinem Umfang verteilten Schneiden versehen ist, wobei der Schneidteil mit einem Mitnehmerstift ausgestattet ist, der in einer Stütznut im Mitnehmerkopf eingelegt ist.

### Stand der Technik

Auf Nachbearbeitungswerkzeuge werden bei der Präzisionsbearbeitung von Löchern zumeist hohe Anforderungen betreffend die gesamte Präzision der Ausführung und der Qualität des Materials gestellt, was deren Preis und dadurch auch die Kosten dieser Bearbeitung beträchtlich erhöht.

Diese Kosten können in einem beträchtlichen Maß beschränkt werden, insbesondere durch eine Ausführung, bei der das Werkzeug mit einem verlängerten Schaft versehen ist, der vor allem eine federnde Einführung in das vorgebohrte Loch und dadurch auch eine Kompensation der eventuellen Ungleichachsigkeit des Loches und des Werkzeuges ermöglicht.

Ferner werden auch Werkzeuge mit austauschbaren Schneidteilen verwendet, die eine schnellere Abnutzung als andere Werkzeugtragteile erfahren. Eine ustauschbarkeit des Schneidteiles ist ökonomisch besonders vorteilhaft bei Werkzeugen mit abriebbeständigen Überzügen, z.B. mit Titannitrid, denn die Ausbeute der Vakuumkammern für das Überziehen wird dadurch vielfach erhöht. In dem angeführten Sinne ist eine effektive Lösung der austauschbaren Schneidteile besonders aktuell bei Werkzeugen für das Nachbearbeiten von Löchern kleinerer und mittlerer Abmessungen, also im Bereich von 5 bis 25 mm.

Es sind ebenfalls Werkzeuge mit einem verlängerten Schaft und mit zwei bis vier Hartmetall-Führungsplatten bekannt, die auf dem Umfang des Schneidteiles zusammen mit einer austauschbaren Schneidplatte verteilt sind, welche durch eine Schraube in den Werkzeugkopf eingespannt wird. Zu den Nachteilen dieser Lösung gehört jedoch außer der relativ niedrigeren Bearbeitungsproduktivität wegen nur einer Schneide und der beträchtlichen Ansprüche an die Genauigkeit des Werkzeughalters auch, daß der Austausch der mittels Schraubenverbindung eingespannten Schneidplatte verhältnismäßig schwierig ist und insbesondere bei Mehrspindelmaschinen und Bearbeitungszentren unerwünschte Stillstandzeiten dieser hoch produktiven Maschinen entstehen.

Bei einer bekannten Lösung nach US 4 995 768 besteht das komplette Werkzeug aus einem Halter mit einem Mitnehmerkopf und aus dem austauschbaren Werkzeug, dessen Zylinderträger mit einem Mitnehmerstift, der auf einer Seite des Trägers herausragt, ausgestattet ist, wobei die Rohrwand des Mitnehmerkopfes mit einer Stütznut versehen ist und Seitenwände von dieser Stütznut mit der Achse des Wekrzeuges einen Winkel von 90° zusammenschließen. Ins Mittelbereich der Stütznut mündet eine Führungsaussparung, die auf der inneren Fläche des Halters durchgefüht ist. Um die Stirnseite des Zylindersträgers ist eine Druckfeder abgestützt, die in dem obigen Teil des Hohlraums des Halters eingeordnet ist.

Zu des Nachteilen von dieser Lösung zählt unsichere Fixierung des Mitnehmerstites in der Stütznut nur durch den Reibungswiderstand bei der Kraftreaktion von der Druckfeder, was in Folge von Schwungkräften bei der Rotationseinstellung des Werkzeuges oder bei seinem stoßartigen Versetzen in die Arbeitsposition zum eigenwilligen Auslösen und Ausfallen des Werkzeuges führen kann. Ferner ist sehr ungünstig, daß vor allem bei der Reibahle-Werkzeugen für kleinere Löcher aus den Funktions- und und Festigkeitgründen nicht möglich ist, den Mitnehmerkopf mit kleinerem Aussendurchmesser als der Durchmesser von Löchern durchzuführen, was die Einsetzung für die Erzeugung von den tiefen Löchern ausschließt.

Eine andere Lösung für das austauschbare Werkzeug wird in der Patentschrift US 2 057 143 vorgestellt. Es werden wieder mehrere Mitnehmerstifte für die Befestigung von einem Schneidewerkzeug in den Mitnehmerkopf benutzt. Diese Konstruktion hat aber dieselbe Nachteile wie vorhergenannte Lösung. Auserdem gibt es die Gefahr der Verstopfung der Stütznut für der Mitnehmerstift von den Spannen und Unreinigkeiten und dadurch wäre die sichere Funktion gestört.

Der EP 0 580 486 erwähnt ein Bajonettverschluß zur Befestigung von zwei Zylinderbüchsen. Die Bajonettverschlüße von dieser Art sind für die Aplikation auf die austauschbaren Reibahle-Werkzeuge aus den Abmessungsgründen nicht geeignet. Außerdem ist dieser Bajonettverschluß eine Lösung für eine statische Verbindung, für den Einsatz bei dynamischen Kraftübertragungen beim Reibahlen ist es aber nicht geeignet.

Eine weitere Lösung auf dem Prizip vom Bajonettverschluß ist aus der Patentschrift US 1 766 136 (Nächstliegender Stand der Technik) bekannt. Der Werkzeugträger ist mit einer Mitnehmernocken versehen, der in einen Mitnehmerkopf, der mit einer inneren Formnut versehen ist, zuerst eingesteckt wird und dann in die Formnut eingedrückt wird. Die Formen der Formnut und des Nockens passen zueinander. Der Mitnehmernocken ist durch eine Feder vorgespannt. Ein grosser Nachteil aber besteht darin, daß die Formnut geschlossen ist und es besteht wieder eine Gefahr der Verstopfung der Formnut für den Mitnehmernocken von den Spannen und Unreinigkeiten und dadurch wäre die sichere Funktion gestört.

Aus der Patentschrift US 2 337 402 ist ein Werkzeug für das Bohren bestehend aus einem Einspannteil, einem Mitnehmerkopf und einem zylinderförmigen Tragschaft für den Bohrer, wobei der Tragschaft mit einem Mitnehmerschraube ausgestattet ist, die in eine Ausparung passt, wobei diese Aussparung in eine sich longitudinal des Werkzeugs erstreckende Nut übergeht, und diese eine größere Breite als der Durchmesser der Mitnehmerschraube aufweist und über einen Bogen an die Nut durchlaufend angeschlossen ist, wobei sowohl die Aussparung als auch die Nut durch die ganze Rohrwand des Mitnehmerkopfes durchgehen. Die Lage der Mitnehmerschraube ist aber keineswegs gesichert. Solche Lösung ist nur für einfache Operationen wie z.B. Bohren geeignet.

Bei einer anderen bekannten Lösung ist der Schneidteil einer Mehrschneiden-Reibahle mittels eines kegeligen Spannschaftes befestigt, der durch eine Achsenschraube in einen kegeligen Hohlraum des Werkzeugschaftes eingezogen wird. Zu den Nachteilen dieser Lösung gehört ein erhöhter Arbeitsaufwand der Werkzeugherstellung, insbesondere der erwähnten kegelförmigen Flächen und der Schraubenverbindung, und auch der Austausch des Schneidteiles ist, hinsichtlicht der Schraubenverbindung, relativ arbeitsaufwändig.

### Wesen der Erfindung

Die oben angeführten Nachteile werden durch ein Nachbearbeitungswerkzeug gemäß Anspruch 1 beseitigt.

Eine bevorzugte Ausführungs form der Erfindung besteht darin, daß die federnde Zunge durch eine Zwischenwand zwischen der Stütznut und der gleichlaufenden senkrechten Nut gebildet wird.

Die Arbeit mit dem Werkzeug gemäß dieser Erfindung ist sehr effektiv und praktisch. Es wird ein System der austauschbaren Schneidteile genutzt, sodaß es bei einer Abnutzung der Schneiden genügt, nur diesen Schneidteil auszutauschen. Der Austausch des Schneidteiles ist infolge der Lagerung des Stiftes in den Nuten des Mitnehmerkopfes sehr schnell und einfach, wobei die Lagerung des Schneidteiles in dem Mitnehmerkopf äußerst betriebssicher ist.

### Übersicht der Abbildungen in den Zeichnungen

Die Erfindung wird näher anhand der beigefügten Zeichnungen erläutert, wo in Fig. 1 ein Werkzeug gemäß der Erfindung mit einer Stütznut und einer zweiten gleichlaufenden Nut dargestellt ist, Fig. 2 zeigt einen zum Teil verdrehten Schnitt durch den Mitnehmerkopf dieses Werkzeuges und Fig. 3 zeigt andere Ausführung der Führungsaussparung zu der Stütznut.

### Ausführungsbeispiele der Erfindung

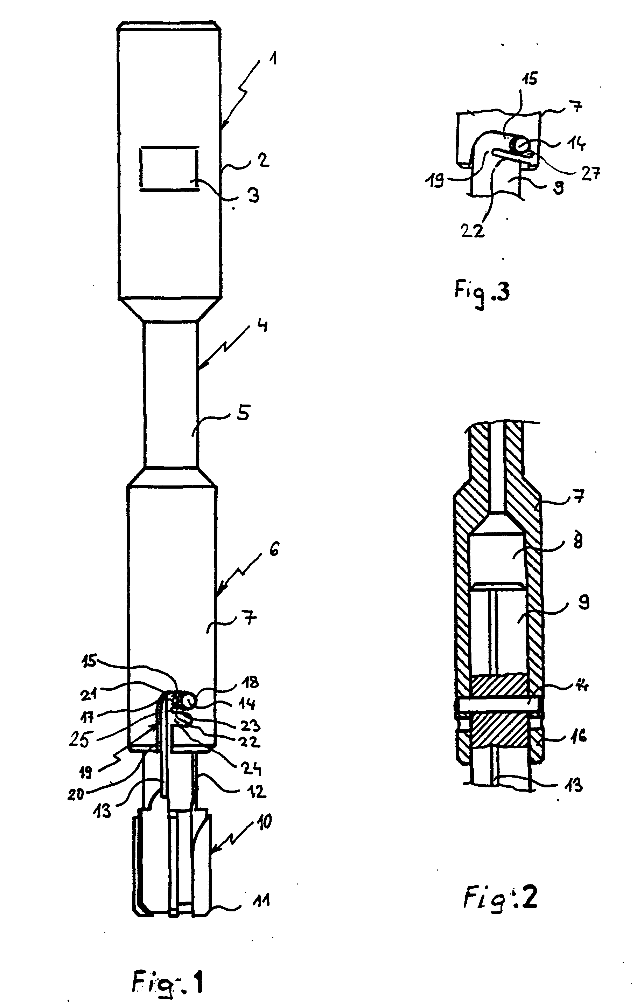

Das Werkzeug nach Fig. 1 und 2 besteht aus einem Einspannteil 1, der von einem zylindrischen Schaft 2 mit einer Plannut 3 für das Einspannen des Werkzeuges mittels einer nicht dargestellten Schraube in den nicht dargestellten Kopf der Werkzeugmaschine gebildet wird. Der Einspannteil 1 kann auch in einer anderen Ausführung ausgebildet sein, z.B. mit einem kegelförmigen Schaft. Auf den Einspannteil 1 lenkt ein Schaft 4 an, auf dem zwecks einer federnden Einführung des Werkzeuges in das vorgebohrte Loch ein schlanker Hals 5 ausgebildet ist. In dem unteren Teil 6 des Schaftes 2 befindet sich der Mitnehmerkopf 7, in dem ein zylinderförmiger Hohlraum 8 ausgebildet ist. Bei einer anderen Ausführung kann der Mitnehmerkopf 7 direkt an den Einspannteil 1 angelenkt sein, ohne ein Zwischenglied des schlanken Halses 5, oder kann dieser direkt sein Bestandteil sein. In dem zylindrischen Hohlraum 8 ist ein Tragschaft 9 des Schneidteiles 10 gelagert, auf dessen Umfang vier Schneiden verteilt sind.

Als optimales Spiel zwischen dem zylinderförmigen Hohlraum 8 des Mitnehmerkopfes 7 und der Oberfläche des Tragschaftes 9 zeigte sich ein Spiel von 5 - 12 µm.

Bei diesem Spielraum ist nämlich der Schneidteil 10 so gelagert, daß eine bestimmte Ausschwenkung von der Werkzeugachse möglich ist, was eine positive Einwirkung auf ein optimales Zentrieren des Schneidteiles 10 gegenüber dem vorgebohrten Loch sicherstellt.

Auf der zylindrischen Oberfläche 12 des Tragschaftes 9 können Zuführungsrillen 13 für die Zuführung der Kühlflüssigkeit ausgeführt werden. In dem Tragschaft 9 ist ein Mitnehmerstift 14 eingepreßt, der in zwei in der Rohrwand 16 des Mitnehmerkopfes 7 des Schaftes 4 ausgebildete Stütznuten 15 einklinkt. Die Länge des Mitnehmerstiftes 14 entspricht höchstens dem Durchmesser des Mitnehmerkopfes 7. Die obere von den Seitenflächen der Stütznute 15 schließt mit den Mantellinien des zylinderförmigen Hohlraumes 8 einen Winkel von 90° ein und die untere Seitenfläche schließt gegenüber den Mantellinien des zylinderförmigen Hohlraumes 8 einen in dem Sinne spitzeren Winkel ein, daß sich die gegenseitige Entfernung der Seitenflächen 17 bis zu einer Größe vermindert, die beispielsweise um 0,15 mm kleiner ist als der Durchmesser des Mitnehmerstiftes 14.

Der Radius auf dem Endteil 18 der Stütznut 15 entspricht dem Radius des Mitnehmerstiftes 14. Die Stütznut 15 übergeht dabei durchlaufend über den Bogen 21 in eine senkrechte Nut 20. Die untere der Seitenflächen bildet die obere Fläche einer federnden Zunge 25, welche von einer relativ dünnen Zwischenwand 23 zwischen der Stütznut 15 und der gleichlaufenden Nut 24 gebildet wird, die in die senkrechte Nut 20 mündet. Diese Zunge 25 ist federnd oben in Richrung der Achse des Schneideteiles 10 und in Richtung zum Mitnehmerkopf 7 vorgespant.

In Fig. 3 ist eine vereinfachte Variante der der federnden Zunge 25, wo die Stütznut 15 um einen Spalt 27 zur Erhöhung der Federkraft verlängert ist.

Das Einsetzen des austauschbaren Schneidteiles 10 in das Werkzeug erfolgt durch axiales Einschieben und verdrehen desselben,wobei der Mitnehmerstift 14 in die Stütznut 15 einklinkt, wo er durch die federnde Zunge 22 gesichert wird. Beim Herausnehmen des Schneidteiles 10 aus dem Werkzeug wird umgekehrt vorgegangen.

## Patentansprüche

1. Nachbearbeitungswerkzeug für die Präzisionsbearbeitung von Löchern bestehend aus einem Einspannteil (1), einem Mitnehmerkopf (7) und einem austauschbaren Schneidteil (10) mit mindestens drei auf seinem Umfang verteilten Schneiden, die mit deren zylinderförmigen Tragschaft (9) verbunden sind, wobei der Schneidteil (10) mit einem Mitnehmerstift (14) auf dem Tragschaft (9) ausgestattet ist, der in eine Fuhrungsausparung im Mitnehmerkopf paßt, wobei die Führungsaussparung eine, eine größere Breite als der Durchmesser des Mitnehmerstiftes (14) aufweisende und sich longitudinal des Werkzeugs erstreckende Nut (20) aufweist, die über einen Bogen (21) an eine Stütznut (15) durchlaufend angeschlossen ist, daduch gekennzeichnet, daß beide Nuten (15,20) durch die ganze Rohrwand (16) des Mitnehmerkopfes (7) durchgehen, und daß die untere Wand der Stütznut (15) durch eine federnde Zunge (22) gebildet ist.

2. Werkzeug nach Anspruch 1, **dadurch gekennzeichnet, daß** die federnde Zunge durch eine Zwischenwand (23) zwischen der Stütznut (15) und der gleichlaufenden Nut (24) gebildet ist.

## Claims

1. Finishing tool for the precision machining of holes, comprising a clamping member (1), an engagement head (7) and an interchangeable cutting member (10) having at least three cutting edges, which are distributed over its periphery and are connected to the cylindrical supporting shaft (9) thereof, the cutting member (10) being provided with a catch pin (14) on the supporting shaft (9), which pin fits in a guide recess in the engagement head, the guide recess having a groove (20) which has a greater width than the diameter of the catch pin (14) and extends longitudinally of the tool, said groove continuously communicating with a supporting groove (15) via an end member (21), **characterised in that** the two grooves (15, 20) extend through the entire tubular wall (16) of the engagement head (7), and **in that** the lower wall of the supporting groove (15) is formed by a resilient tongue (22).

2. Tool according to claim 1, **characterised in that** the resilient tongue is formed by an intermediate wall (23) between the supporting groove (15) and the identically extending groove (24).

## Revendications

1. Outil de finissage pour l'usinage de précision de trous, comprenant une patte d'attache (1), une tête d'embrayage (7) et un couteau interchangeable (10) ayant au moins trois tranchants, qui sont répartis sur sa périphérie and qui se réunissent au manche de support cylindrique (9) dudit outil, le couteau (10) étant pourvu d'une goupille de raccrochement (14) sur le manche de support (9), et ladite goupille s'emboîte dans un enfoncement de guidage dans la tête d'embrayage, l'enfoncement de guidage ayant une rainure (20) qui a une largeur plus grande que le diamètre de la goupille de raccrochement (14) et qui s'étend longitudinallement de l'outil, ladite rainure communiquant continûment avec une rainure de support (15) par une partie d'extrémité (21), charactérisé en ce que les deux rainures (15, 20) s'étendent à travers toute la paroi tubulaire (16) de la tête d'embrayage (7), et en ce que la paroi inférieure de la rainure de support (15) consiste en une languette élastique (22).

2. Outil selon la revendication 1, charactérisé en ce que la languette élastique consiste en une paroi intermédiaire (23) entre la rainure de support (15) et la rainure (24) qui s'étend d'une façon identique.
